# EUROPÄISCHE PATENTSCHRIFT

(11) **EP 2 799 718 B1**
(45) Veröffentlichungstag und Bekanntmachung des Hinweises auf die Patenterteilung: **13.06.2018**
(21) Anmeldenummer: 13166407.0
(22) Anmeldetag: 03.05.2013
(51) Int. Cl.: F04D 29/046, F04D 29/047, F16C 43/02, F04D 29/62, F16C 17/02, F16C 17/22, F16C 33/04

(54) **VORMONTIERTE GLEITLAGEREINHEIT ZUR LEICHTEN ANBRINGUNG AUF EINER WELLE**
PREASSEMBLED SLIDING SURFACE BEARING UNIT FOR EASY MOUNTING ON A SHAFT
UNITÉ DE PALIER GLISSANT PRÉASSEMBLÉE POUR MONTAGE FACILE SUR UN ARBRE

(43) Veröffentlichungstag der Anmeldung: 05.11.2014
(73) Patentinhaber: Grundfos Holding A/S, 8850 Bjerringbro (DK)
(72) Erfinder: Klausen, Johnny Trangbæk, 8800 Viborg (DK); Sørensen, Thomas, 8600 Silkeborg (DK)
(74) Vertreter: Patentanwälte Vollmann & Hemmer

(56) Entgegenhaltungen:
- EP-A1- 0 345 214
- EP-A1- 0 492 605
- EP-A1- 0 667 456
- WO-A1-90/10161
- DE-A1- 19 824 128
- DE-U1- 8 706 954
- US-A- 2 702 730
- US-A- 2 956 841

## Beschreibung

Die Erfindung betrifft eine Lagereinheit, welche ausgebildet ist zur Anbringung an einer Welle eines Pumpaggregats.

Lagereinheiten sind in Pumpenaggregaten, insbesondere in mehrstufigen Kreiselpumpenaggregaten erforderlich, um die drehbare Welle, insbesondere auch zwischen den einzelnen Pumpenstufen, in radialer Richtung zu lagern.

Eine bekannte Lagereinheit ist aus DE 87 06 954 U bekannt. Bei dieser ist eine Trägerbuchse mittels Mitnehmerstiften drehfest an einer Welle fixiert. Mittels weiteren Mitnehmerstiften ist an der Trägerbuchse eine Lagerhülse angeordnet, welche in axialer Richtung über eine Schraube gemeinsam mit der Trägerbuchse an der Welle fixiert ist. Diese Anordnung ist zum einen nicht geeignet, um an einer durchgehenden Welle, beispielsweise zwischen einzelnen Pumpenstufen, angebracht zu werden. Zum anderen erfordert die Anordnung der Mitnehmerstifte eine sehr präzise Fertigung unter Einhaltung der geforderten Toleranzen und führt zu einer recht aufwändigen Montage.

US 2,702,730 A offenbart eine Lageranordnung zur Montage an einer Welle, wobei die Lageranordnung eine Hülse aufweist, welche mithilfe einer Madenschraube auf der Welle drehfest befestigt werden kann. Die Hülse weist umfängliche schwalbenschwanzförmige Nuten auf, in welche ein Lagermaterial aus Kunststoff eingegossen ist, sodass eine formschlüssige Verbindung zwischen der Hülse und dem Lagermaterial geschaffen wird. Eine solche Verbindung eignet sich allerdings nur für ein eingießbares Lagermaterial und erfordert spezielle Werkzeuge.

US 2,956,841 A offenbart eine Lageranordnung zur Anbringung an einer Welle. Die Lageranordnung weist einen Träger mit sich axial erstreckenden federnden Stegen auf, wobei eine Zentrierhülse mittels Nieten an diesen Stegen befestigt ist. Auf die Zentrierhülse ist ein Lagermaterial aufgeschrumpft. Die Montage dieser Lagereinheit ist relativ aufwendig.

DE 87 06 954 U1 offenbart ein Gleitlager für Pumpen, bei welchem auf die Pumpenwelle zunächst eine Zwischenhülse aufgesetzt wird, welche über Mitnehmer drehfest an der Welle fixiert ist. Eine Lagerhülse wird zwischen dieser Hülse und einer in die Welle eingeschraubten Schraube fixiert. Dies erfordert es, das gesamte Lager direkt an der Welle zu montieren, sodass eine Vormontage der Lagereinheit nicht möglich ist.

Vor diesem Hintergrund ist es daher Aufgabe der Erfindung, eine verbesserte vormontierte Lagereinheit zur Anbringung an einer Welle eines Pumpenaggregates zu schaffen, welche leichter und kostengünstiger herzustellen und an einer Welle anzubringen ist.

Diese Aufgabe wird erfindungsgemäß durch eine Lagereinheit mit den in Anspruch 1 angegebenen Merkmalen sowie durch ein Verfahren zur Herstellung einer vormontierten Lagereinheit mit den in Anspruch 16 angegebenen Merkmalen sowie durch ein Pumpenaggregat mit den in Anspruch 17 angegebenen Merkmalen gelöst. Vorteilhafte Ausgestaltungen sind in den Unteransprüchen, der nachfolgenden Beschreibung und den Zeichnungen angegeben.

Die erfindungsgemäße vormontierte Lagereinheit, welche ausgebildet ist zur Anbringung an einer drehbaren Welle eines Pumpenaggregates, weist eine Hülse zur Aufnahme der Welle und eine an der Hülse außenumfänglich fixierte Lagerhülse auf. Die Lagerhülse dient dazu, in einem Pumpenaggregat mit einem äußeren feststehenden Lagerring zur Radiallagerung gleitend in Kontakt zu kommen. Dazu erstreckt sich die Lagerhülse mit ihrer äußeren Fläche, welche die Lagerfläche bildet, konzentrisch zur Drehachse. Vorzugsweise weist die Außenfläche der Lagerhülse eine kreiszylindrische Außenkontur auf. Die Hülse dient als Träger für die Lagerhülse und zur drehfesten Fixierung der Lagerhülse an der Welle. Erfindungsgemäß weist die Hülse dazu an einem ersten axialen Ende eine erste Anlageschulter sowie ein Eingriffselement auf, welches zum formschlüssigen, drehfesten Eingriff mit der Welle oder einem mit der Welle verbundenen Bauteil ausgebildet ist. An einem zweiten entgegengesetzten axialen Ende weist die Hülse eine zweite Anlageschulter auf, welche die Lagerhülse in einer Axialrichtung fixiert. Das heißt, die Lagerhülse liegt zweckmäßigerweise mit einem Axialende an der ersten Anlageschulter an oder stützt sich an der ersten Anlageschulter ab und stützt sich mit dem entgegengesetzten Axialende an der zweiten Anlageschulter ab, sodass sie in axialer Richtung zwischen den Anlageschultern fixiert ist.

Das Eingriffselement dient dazu, die Hülse mit der Lagerhülse drehfest an einer Welle zu fixieren. Die Hülse und/oder das Eingriffselement sind dabei so ausgestaltet, dass sie sich gemeinsam mit der an der Hülse angebrachten Lagerhülse konzentrisch zur Drehachse der Welle ausrichten.

Das Eingriffselement sowie die erste Anlageschulter sind in Richtung der Längsachse gesehen an einem ersten axialen Ende der Hülse angeordnet. Durch den formschlüssigen, drehfesten Eingriff des Eingriffselements mit der Welle oder einem mit der Welle verbundenen Bauteil rotiert während des Betriebs des Pumpenaggregats die Hülse und somit die außenumfänglich an der Hülse fixierte Lagerhülse mit der Welle mit. Die Lagerhülse ist an der Hülse derart fixiert, dass ihre Längsachse bei Anbringung an einer Welle mit der Rotationsachse der Welle übereinstimmt.

Die Lagerhülse ist an der Hülse so befestigt, dass sie gemeinsam mit dem Eingriffselement eine vorgefertigte Lagereinheit bildet, welche so auf einfache Weise bei der Montage eines Pumpenaggregates an der Welle angebracht werden kann.

Die erste und zweite Anlageschulter ermöglichen dabei eine einfache Fixierung der Lagerhülse an der Hülse, nämlich zwischen der ersten Anlageschulter an dem ersten Ende der Hülse und der zweiten Anlageschulter am entgegengesetzten zweiten Ende der Hülse.

Die erste Anlageschulter ist durch das Eingriffselement gebildet. So wird die Lagerhülse zwischen der zweiten Anlageschulter und dem Eingriffselement fixiert. Die erste Anlageschulter kann von einem Axialende des Eingriffselements gebildet sein, welches vorzugsweise radial gegenüber der Hülse nach außen auskragt.

Bevorzugt weist die vormontierte Lagereinheit zumindest ein Fixierungselement, vorzugsweise an dem Eingriffselement auf, welches die Lagereinheit an der Welle oder dem mit der Welle verbundenen Bauteil axial fixieren kann. Das Fixierungselement dient somit dazu, die vorgefertigte Lagereinheit axial an der Welle zu fixieren. Dadurch kann insbesondere verhindert werden, dass das Eingriffselement von der Welle oder dem mit der Welle verbundenen Bauteil in axialer Richtung außer Eingriff tritt. Vorzugsweise ist das Fixierungselement so ausgebildet, dass es eine lösbare Fixierung des Eingriffselementes ermöglicht, sodass die Lagereinheit beispielsweise zu Wartungs- oder Reparaturzwecken demontierbar ist.

Besonders bevorzugt weist das zumindest eine Eingriffselement eine Umfangswandung auf, welche zumindest einen Schlitz aufweist, wobei das Fixierungselement den Schlitz durchgreift. Der Schlitz erstreckt sich dabei vorteilhafterweise quer zur Rotationsachse der Welle am Eingriffselement. Das Fixierungselement ist dabei vorzugsweise so ausgebildet, dass es sowohl mit dem Schlitz als auch mit der Welle oder einem an der Welle angeordneten Bauteil formschlüssig in Eingriff treten kann. So kann an der Welle bzw. einem an der Welle angeordneten Bauteil beispielsweise eine Nut oder eine Hinterschneidung vorgesehen sein, mit welcher das Fixierungselement in Eingriff tritt. Bei einer axialen Bewegung des Eingriffselements gegenüber der Welle bzw. dem Bauelement an der Welle kommt das axial an der Welle gesicherte Fixierungselement mit der Wandung des Schlitzes am Eingriffselement in Anlage. Die axiale Bewegung kann somit entweder eingeschränkt oder verhindert werden. Der Schlitz erleichtert darüber hinaus die Montage, da das Fixierungselement einfach in den Schlitz quer zur Rotationsachse eingeschoben werden kann, um mit der Welle und/oder einem mit der Welle verbundenen Bauteil zur axialen Sicherung in Eingriff zu treten. Auf diese Weise kann auf eine aufwändige Verschraubung verzichtet werden.

In einer bevorzugten Ausführungsform ist das zumindest eine Fixierungselement als Federbügel ausgestaltet. Der Federbügel ist beispielsweise aus Draht ausgebildet und weist eine elastische Verformbarkeit auf. So kann der Federbügel verformt werden, um mit dem Eingriffselement und der Welle bzw. einem mit der Welle verbundenen Bauteil in Eingriff gebracht zu werden. Durch die elastischen Rückstellkräfte wird er dann im gewünschten Eingriff mit den Bauteilen zur axialen Fixierung gehalten. Dabei ist der Federbügel vorzugsweise so ausgebildet, dass er durch elastische Verformung so mit den zu fixierenden Bauteilen in Eingriff gebracht wird, dass er in seiner Einsetzrichtung eine Hinterschneidung umgreift, welche es anschließend verhindert, dass der Federbügel unbeabsichtigt von den Bauteilen wieder außer Eingriff tritt. Beispielsweise kann der Federbügel in radialer Richtung bezogen auf die Drehachse der Welle unter elastischer Weitung auf die Welle aufgeschoben und dabei beispielsweise gleichzeitig in den vorangehend beschriebenen Schlitz, vorzugsweise in zwei diametral gegenüberliegende Schlitze, an dem Eingriffselement eingeschoben werden. Anschließend umgreift der Federbügel nach elastischer Rückverformung vorzugsweise die entgegengesetzte Seite der Welle, sodass er auch in radialer Richtung fixiert ist.

Das Eingriffselement weist bevorzugt eine nicht rotationssymmetrische Umfangswandung auf, welche vorzugsweise zumindest stellenweise eckig ausgestaltet ist. Die Welle oder das mit der Welle verbundene Bauteil weisen vorzugsweise in dem Bereich, welcher mit dem Eingriffselement in Eingriff tritt, eine korrespondierende, nicht rotationssymmetrische Gestalt auf, sodass ein formschlüssiger Eingriff zwischen der nicht rotationssymmetrischen Umfangswandung und der Welle bzw. einem mit der Welle verbundenen Bauteil möglich wird, welches eine Drehmomentübertragung von der Welle auf das Eingriffselement ermöglicht. Insbesondere kann eine teilweise eckige, besonders bevorzugt vieleckige Ausgestaltung der Umfangswandung vorgesehen sein, wobei die Umfangswandung sich gleichzeitig bevorzugt parallel zur Drehachse erstreckt.

So kann die Umfangswandung an ihrem Innenumfang im Querschnitt z. B. sechseckig ausgebildet sein. Greift die Welle oder das an der Welle befindliche Bauelement in das Eingriffselement ein, so kommt der in zumindest einem Querschnitt sechseckig gestaltete Innenumfang der Umfangswandung vorzugsweise mit der Außenwandung der Welle oder des an der Welle befindlichen Bauelements in Anlage. Die Welle bzw. das mit der Welle verbundene Bauteil weisen bevorzugt einen korrespondierenden sechseckigen Außenquerschnitt auf, welcher es ermöglicht, mit dem sechseckigen Innenquerschnitt des Eingriffselementes formschlüssig zur Drehmomentübertragung in Eingriff zu treten. Wenn sich die Innenumfangswandung des Eingriffselementes parallel zur Drehachse erstreckt, weist der Innenumfang somit eine hexagonale Form auf.

Alternativ kann das Eingriffselement auch jede andere nicht rotationssymmetrische Ausgestaltung haben, welche mit einer korrespondierenden nicht rotationssymmetrischen Ausgestaltung an der Welle oder einem an der Welle fixierten Bauteil drehfest in Eingriff tritt. So können beispielsweise an einer inneren Umfangswandung des Eingriffselementes radial nach innen gerichtete Vorsprünge vorgesehen sein, welche in korrespondierende Ausnehmungen an der Welle oder einem mit der Welle verbundenen Bauteil formschlüssig eingreifen.

Am Innenumfang der Hülse ist vorzugsweise zumindest ein Ring ausgebildet, der radial inwärts gerichtet aus dem Innenumfang herausragt. Der Ring weist eine zur Lagerfläche konzentrische Innenumfangsfläche auf und hat vorzugsweise einen Innendurchmesser, welcher an den Außendurchmesser der Welle, welche sich durch die Hülse erstrecken soll, angepasst ist. Durchgreift die Welle die Hülse, so kommt der Ring umfänglich zur Rotationsachse an der Außenfläche der Welle in Anlage. Die Hülse und somit die Lagereinheit wird an der Welle durch diese zumindest eine Anlagefläche, welche den Innenumfang des Ringes bildet, radial fixiert und zentriert. Zwischen dem Innenumfang der Hülse, welcher nicht in Anlage mit der Welle ist, und der Außenfläche der Welle ergeben sich somit Freiräume. Diese Freiräume können beispielsweise dann von Vorteil sein, wenn während des Betriebs des Pumpenaggregats Welle und Lagereinheit heiß werden und es dabei zu unterschiedlichen thermischen Ausdehnungen der Materialien kommt. Ebenso können diese Freiräume die Montage erleichtern. Der Ring bildet somit eine in axialer Richtung im Vergleich zur Hülse kurz ausgebildete Zentrierfläche, wodurch das Aufsetzten der Hülse auf die Welle erleichtert wird. Anstelle eines durchgehenden Ringes als Zentrierfläche können auch mehrere einzelne über den Umfang verteilte Zentrierflächen am Innenumfang der Hülse vorgesehen sein, welche mit der Außenfläche der Welle zentrierend zur Anlage kommen.

Bevorzugt weist die Lagerhülse an einem ersten Axialende, welches vorzugsweise der ersten Anlageschulter und dem Eingriffselement zugewandt ist, zumindest einen Mitnehmer auf, der mit zumindest einem an dem Eingriffselement, der ersten Anlageschulter oder der Hülse ausgebildeten korrespondierendem Mitnahmeelement drehfest in Eingriff ist. Der formschlüssige Eingriff zwischen Mitnehmer und Eingriffselement sorgt dafür, dass die Lagerhülse sich gemeinsam mit der Hülse und damit mit der Welle mitdreht.

Besonders bevorzugt ist der mindestens eine Mitnehmer als Aussparung oder Vorsprung ausgebildet. Das korrespondierende Mitnahmeelement ist entsprechend komplementär geformt. Besonders bevorzugt ist in der keramischen Lagerhülse vorzugsweise zumindest eine Ausnehmung ausgebildet, in welche ein Vorsprung an der Hülse, der ersten Anlageschulter bzw. dem Eingriffselement formschlüssig eingreift. Besonders bevorzugt sind an der Lagerhülse zwei Mitnehmer an diametral entgegengesetzten Seiten und an der Hülse bzw. dem Eingriffselement korrespondierend zwei diametral gegenüberliegend angeordnete Mitnahmeelemente angeordnet.

Das Eingriffselement ist vorzugsweise als geformtes Blechteil ausgebildet. Durch Blechumformung kann dem Eingriffselement zum einen die erforderliche Form zum formschlüssigen Eingriff mit der Welle bzw. einem mit der Welle verbundenen Bauteil gegeben werden und es kann gleichzeitig auf einfache Weise ein Mitnahmeelement oder es können mehrere Mitnahmeelemente ausgeformt werden, welche den formschlüssigen Eingriff mit der Lagerhülse bzw. deren Mitnehmer bewirken. So ist das zumindest eine Mitnahmeelement an dem Eingriffselement vorzugsweise als axial gerichtete Ausformung ausgebildet. Das Eingriffselement kann so ausgebildet sein, dass es sich radial über den Außenumfang der Hülse hinaus erstreckt. So wird eine ringförmige Axialfläche des Eingriffselementes außenumfänglich der Hülse geschaffen, welche vorzugsweise die erste Anlageschulter bildet und an welcher vorzugsweise das Mitnahmeelement in Form einer axial gerichteten Ausbuchtung ausgeformt ist. Bevorzugt sind zwei derartige Mitnahmeelemente an diametral entgegengesetzten Seiten ausgebildet. Der oder die Mitnehmer an der Lagerhülse sind vorzugsweise als Ausnehmungen bzw. Nuten an einer axialen Stirnseite der Lagerhülse ausgebildet, in welchen die axial gerichteten Mitnahmeelemente eingreifen. Die Ausgestaltung als Blechformteil hat den Vorteil, dass sehr kostengünstig die Eingriffskontur zum formschlüssigen Eingriff mit der Welle und gleichzeitig die erforderlichen Mitnahmeelemente zum formschlüssigen drehfesten Eingriff mit der Lagerhülse ausgebildet werden können.

Bevorzugt ist eine Feder zwischen der Lagerhülse und der zweiten Anlageschulter der Hülse angeordnet. Sie dient somit der axialen Fixierung der Lagerhülse an der Hülse. Gleichzeitig kann die Feder durch ihre Federwirkung beispielsweise in axialer Richtung nachgeben. Da die Lagerhülse vorzugsweise aus einem keramischen Werkstoff und die Hülse aus einem metallischen Werkstoff, insbesondere Stahl gebildet ist, kann es aufgrund der unterschiedlichen thermischen Ausdehnungskoeffizienten bei Erwärmung zu Spannungen kommen, welche so von der Feder aufgenommen werden können. So wird insbesondere die Lagerhülse vor übermäßigen Axialkräften, welche zu einer Beschädigung der Lagerhülse führen könnten, geschützt. Weiterhin kann auch die Welle geschützt werden. Bei hohen Temperaturen, z. B. oberhalb 240°, dehnen sich z. B. Stahlelemente (Hülse, Eingriffselement) derart aus, dass sich die weniger ausdehende Lagerhülse relativ zu der Welle bewegen könnte. Durch die Feder wird eine solche Relativbewegung mit dem damit verbundenen Verschleiß verhindert. Alternativ oder zusätzlich könnte entsprechend eine Feder auch zwischen der ersten Anlageschulter und der Lagerhülse angeordnet werden.

Die Feder kann z. B. als Spiralfeder ausgebildet sein. Besonders bevorzugt ist die Feder als Tellerfeder ausgebildet, wobei die Tellerfeder vorzugsweise einen s- bzw. z-förmigen Querschnitt aufweist. Im Querschnitt weist die Tellerfeder dabei vorzugsweise an ihren Axialenden sich quer zur Drehachse erstreckende Flächen bzw. Schenkel auf, welche axiale Anlageflächen bilden. Zwischen diesen sich längs bzw. quer zur Drehachse erstreckenden Flächen erstreckt sich ein zur Längsachse konischer Abschnitt, welcher somit im Querschnitt zu den axialen Endflächen gewinkelt verläuft. Diese Ausgestaltung verhindert, dass die Feder vollständig flachgedrückt wird. Die Tellerfeder liegt mit einem Axialende an der Anlageschulter und mit dem entgegengesetzten Axialende an der axialen Stirnseite der Lagerhülse an. Dabei bildet eines der Axialenden der Tellerfeder den Innenumfang und das andere Axialende den Außenumfang. Der Innenumfang liegt vorzugsweise an der Anlageschulter an.

Bevorzugt sind zumindest Teile der Hülse, des Eingriffselements, die erste Anlageschulter, die Feder und/oder mindestens ein Fixierungselement aus Edelstahl, insbesondere rostfreiem Edelstahl gefertigt. Die Verwendung von rostfreiem Edelstahl bietet sich insbesondere bei Verwendung in einer Pumpe, welche korrosive Fluide, wie beispielsweise Wasser fördert, an.

Weiterhin bevorzugt ist die Lagerhülse aus Keramik, vorzugsweise aus Siliziumkarbid gefertigt. Keramik ist ein guter Lagerwerkstoff, welcher eine hohe Verschleißfestigkeit bei geringer Reibung aufweist. Insbesondere Siliziumkarbid weist hier ideale Eigenschaften auf. Die Lagerhülse aus Keramik bildet somit an ihrem Außenumfang eine keramische Gleitfläche, welche mit einer gegenüberliegenden feststehenden Lagerhülse gleitend in Eingriff treten kann. Die feststehende Lagerhülse kann ebenfalls aus Keramik oder aus einem anderen geeigneten Werkstoff gebildet sein. Ein solches Gleitlager wird in einer Pumpe vorzugsweise durch das zu fördernde Fluid, beispielsweise Wasser geschmiert.

In einer bevorzugten Ausführungsform ist die Hülse mit dem Eingriffselement und/oder der ersten Anlageschulter verschweißt, vorzugsweise lasergeschweißt. Auf diese Weise wird eine feste und dauerhafte Verbindung zwischen der Hülse und dem Eingriffselement bzw. der ersten Anlageschulter geschaffen. Die Hülse ist vorzugsweise als Drehteil aus Metall, insbesondere Stahl, weiter bevorzugt rostfreiem Stahl gefertigt, während das Eingriffselement, wie oben ausgeführt, vorzugsweise als Formteil aus Blech, insbesondere rostfreiem Edelstahlblech gefertigt ist. Beide Bauteile lassen sich durch Schweißen trotz der unterschiedlichen Fertigungsverfahren leicht dauerhaft miteinander verbinden. Die Hülse greift dabei vorzugsweise in den Innenumfang einer kreisförmigen Ausnehmung bzw. Öffnung an einer axialen Stirnseite des Eingriffselementes, welche vorzugsweise die erste Anlageschulter bildet, ein, wobei eine ringförmige oder teilweise ringförmige Schweißnaht zwischen dem Innenumfang der Öffnung und dem Außenumfang der Hülse ausgebildet wird. Das Eingriffselement ist bevorzugt zusammen mit der ersten Anlageschulter einstückig vorzugsweise im Wesentlichen topfförmig ausgebildet und die Öffnung, in welche die Hülse eingreift, ist im Boden dieser topfförmigen Gestalt angeordnet. Zu der von der Hülse abgewandten Seite ist das Eingriffselement vorzugsweise offen ausgebildet, sodass von dieser Seite her eine mindestens teilweise ringförmige Schweißnaht zwischen dem Innenumfang der Öffnung und dem Außenumfang der Hülse angrenzend an deren axiale Stirnseite ausgebildet werden kann. Dies ermöglicht eine gute Zugänglichkeit für die Anbringung der Schweißnaht. Dies gilt insbesondere, da die Hülse außenumfänglich von der Lagerhülse umgeben ist.

Besonders bevorzugt ist die Hülse mit dem Eingriffselement und/oder der ersten Anlageschulter entlang mindestens zweier Abschnitte verschweißt, wobei ein Bereich zwischen diesen Abschnitten keine Verschweißung aufweist. Die Schweißnaht zwischen der Hülse und dem Eingriffselement bzw. der ersten Anlageschulter verläuft somit in Umfangsrichtung nicht durchgängig. Vielmehr besteht die Schweißnaht aus mindestens zwei Abschnitten, wobei die beiden Abschnitte nicht direkt aneinander angrenzen. Bevorzugt wird das Eingriffselement bzw. die erste Anlageschulter entlang des Innenumfangs der Öffnung und die Hülse entlang ihres Außenumfangs über insgesamt vier Abschnitte miteinander verschweißt, wobei jeder Abschnitt sich umfänglich um die Hülse über etwa 40° erstreckt. So wird während des Schweißprozesses zuerst entlang eines ersten Abschnitts die Hülse mit dem Eingriffselement bzw. der ersten Anlageschulter verschweißt. Darauf anfolgend wird ein zweiter Abschnitt verschweißt, wobei dieser zweite Abschnitt dem ersten Abschnitt bzgl. der Längsachse der Hülse diametral direkt gegenüberliegt. Es folgt eine weitere Verschweißung an einem dritten Abschnitt, der zwischen dem ersten und dem zweiten Abschnitt liegt. Zuletzt wird entlang eines vierten Abschnitts die Hülse mit dem Eingriffselement bzw. der ersten Anlageschulter verschweißt, wobei der vierte Abschnitt bzgl. der Längsachse der Hülse dem dritten Abschnitt direkt gegenüberliegt. Dieses abschnittsweise Verschweißen ermöglicht, dass eine Defomierung der Hülse, der ersten Anlageschulter und/oder des Eingriffselements durch einseitige Erhitzung während des Schweißprozesses verhindert wird. Gerade durch das Verhindern einer Verformung der Hülse wird das einfache Einführen der Welle in die Hülse weiterhin gewährleistet.

Gegenstand der Erfindung ist neben der vorhergehend beschriebenen Lagereinheit ein Verfahren zur Herstellung einer solchen vormontierten Lagererinheit. Erfindungsgemäß wird ein federndes Element bzw. eine Feder an einer zweiten Anlageschulter einer Hülse angeordnet. Nachfolgend wird eine Lagerhülse an der Hülse angeordnet bzw. auf diese aufgeschoben, wobei ein erstes axiales Ende der Lagerhülse an dem federnden Element ruht. Eine erste Anlageschulter und ein Eingriffselement werden gegen das dem ersten Axialende entgegengesetzte zweite Axialende der Lagerhülse derart gespannt, dass die Lagerhülse zwischen der ersten Anlageschulter und der zweiten Anlageschulter in axiale Richtung fixiert wird. In dieser verspannten Position wird die Hülse mit dem Eingriffselement und/oder der ersten Anlageschulter verschweißt. Die Lagerhülse ist somit in axialer Richtung zwischen den beiden Anlageschultern fixiert. Das federnde Element ist zwischen der zweiten Anlageschulter und dem ersten axialen Ende der Lagerhülse angeordnet. Somit kann die thermische Ausdehnung in axialer Richtung durch elastisches Verformen des federnden Elements aufgenommen werden. Innenumfänglich liegt die Lagerhülse an dem Außenumfang der Hülse an. Durch das Verschweißen der Hülse mit dem Eingriffselement bildet die Lagereinheit eine unlösbare vormontierte Baugruppe, welche einfach an einer Welle eines Pumpenaggregats angeordnet werden kann.

In einer bevorzugten Ausführungsform wird auf die Hülse so zunächst von einem Axialende her die oben beschriebene Feder als federndes Element aufgeschoben und anschließend wird die Lagerhülse aufgeschoben, sodass die Lagerhülse mit der zwischenliegenden Feder an der zweiten Anlageschulter der Hülse zur Anlage kommt. Anschließend wird das Eingriffselement, an welchem vorzugsweise die erste Anlageschulter einstückig ausgebildet ist, auf die Hülse aufgesetzt und mit dieser am Axialende in der beschriebenen Weise verschweißt. Auf diese Weise wird dann die Lagerhülse dauerhaft zwischen dem Eingriffselement und der Anlageschulter fixiert. Die Lagerhülse liegt dabei vorzugsweise an einer ringförmigen Axialfläche des Eingriffselementes an, welche radial über den Außenumfang der Hülse auskragt. Nach dem Verschweißen ist die Lagerhülse unlösbar an der Hülse fixiert, sodass eine vormontierte, einfach zu handhabende Lagereinheit geschaffen wird. Die gesamte Fertigung ist einfach, da auf Schraubverbindungen und den Einsatz loser Bauteile, wie Mitnehmerstifte verzichtet werden kann. Vielmehr ist die ganze Lagereinheit vorzugsweise aus lediglich vier Bauteilen, nämlich der Hülse, der Lagerhülse, dem Eingriffselement und der Feder gebildet. Bezüglich weiterer Details des Verfahrens wird auf die vorangehende Beschreibung der Lagereinheit verwiesen.

Gegenstand der Erfindung ist neben der vorangehend beschriebenen Lagereinheit und dem Verfahren zum Herstellen einer vormontierten Lagereinheit ein Pumpenaggregat mit einer solchen Lagereinheit zur Lagerung der Welle. Bei dem Pumpenaggregat handelt es sich um ein Kreiselpumpenaggregat mit einem Laufrad, welches über eine Welle von einem Antriebsmotor drehend angetrieben wird. Die vorangehend beschriebene Lagereinheit dient der Radiallagerung der Welle. Insbesondere kann das Pumpenaggregat als mehrstufige Kreiselpumpe ausgebildet sein. Dann können gegebenenfalls mehrere der vorangehend beschriebenen Lagereinheiten zur Radiallagerung der Welle vorgesehen sein. In dem Pumpenaggregat weist die Welle vorzugsweise zu dem Eingriffselement korrespondierende Eingriffsabschnitte auf, welche mit dem Eingriffselement formschlüssig und drehfest in Eingriff treten können. Besonders bevorzugt sind die Eingriffsabschnitte als separate Bauteile in Form von Kupplungselementen ausgebildet, welche mit der Welle verbunden werden. Die Kupplungselemente können bevorzugt Teile der Laufräder sein oder aber an den Laufrädern oder Trägern für die Laufräder befestigt sein. Die Kupplungselemente werden vorzugsweise kraftschlüssig auf der Welle fixiert. Bevorzugt werden sie gemeinsam mit den Laufrädern kraftschlüssig auf der Welle fixiert. Dies kann beispielsweise über eine Kegelverbindung geschehen.

Besonders bevorzugt ist das Kupplungselement als Überwurfmutter ausgebildet, welche an ihrem Außenumfang eine Kontur, insbesondere einen sechseckigen Querschnitt oder Einbuchtungen aufweist, welche korrespondierend zu der Innenkontur des Eingriffselementes ausgebildet ist, um mit diesem formschlüssig in Eingriff zu treten. Die Überwurfmutter wird vorzugsweise auf eine zylindrische Hülse eines Laufradträgers aufgeschraubt und drückt eine konische Klemmhülse, welche im Inneren der Hülse des Laufradträgers angeordnet ist, in axialer Richtung in die Hülse des Laufradträgers hinein, sodass die Klemmhülse auf den Außenumfang einer sich durch den Laufradträger und die Überwurfmutter hindurch erstreckende Welle aufgepresst wird. So wird eine kraftschlüssige Verbindung des Laufrades bzw. des Laufradträgers zur Drehmomentübertragung auf der Welle realisiert. Gleichzeitig dient das Teil, welches zur Fixierung des Laufrades dient, nämlich die Überwurfmutter als Kupplungselement bzw. Eingriffsabschnitt zum formschlüssigen Eingriff in das Eingriffselement des Lagerträgers, sodass gleichzeitig der Lagerträger drehfest an der Welle fixiert wird. In radialer Richtung wird der Lagerträger, wie oben beschrieben, vorzugsweise durch die Innenkontur der Hülse der Lagereinheit auf der Welle zentriert. Die Welle weist vorzugsweise eine kreiszylindrische Form mit glatter Außenkontur auf.

Im Falle, dass es sich bei dem Pumpenaggregat um ein mehrstufiges Kreiselpumpenaggregat handelt, ist bevorzugt an jeder Pumpenstufe eine Lagereinheit in der beschriebenen Weise angeordnet.

Nachfolgend wird die Erfindung beispielhaft anhand der beigefügten Figuren beschrieben. In diesen zeigt:
- Fig. 1: eine Seitenansicht einer erfindungsgemäßen Lagereinheit,
- Fig. 2: einen Längsschnitt der Lagereinheit gemäß Fig. 1 entlang der Linie II-II in Fig. 4 a,
- Fig. 3: einen Längsschnitt der Lagereinheit gemäß Fig. 1 und 2 in einer um 90° gedrehten Ebene entlang der Linie III-III in Fig. 4 a,
- Fig. 4a: eine Draufsicht auf das erste axiale Ende der Lagereinheit gemäß Fig. 1 bis 3,
- Fig. 4b: eine Draufsicht auf das erste axiale Ende der Lagereinheit gemäß einer alternativen Ausführungsform,

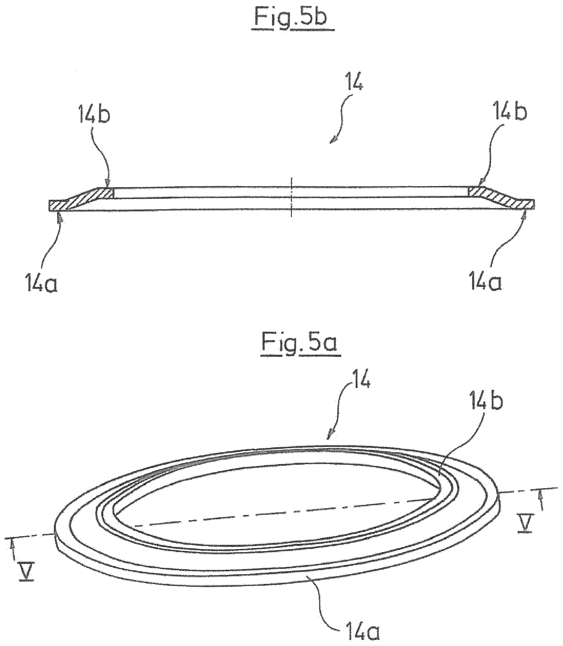

- Fig. 5a: eine perspektivische Gesamtansicht einer Feder der Lagereinheit,
- Fig. 5b: eine Schnittansicht der Feder entlang der Linie V-V in Fig. 5a,
- Fig. 6: eine Schnittansicht einer Pumpenstufe eines mehrstufigen Kreiselpumpenaggregates mit der Lagereinheit gemäß Fig. 4b und
- Fig. 7: eine Schnittansicht eines mehrstufigen Pumpenaggregats mit mehreren Pumpenstufen gemäß Fig. 6.

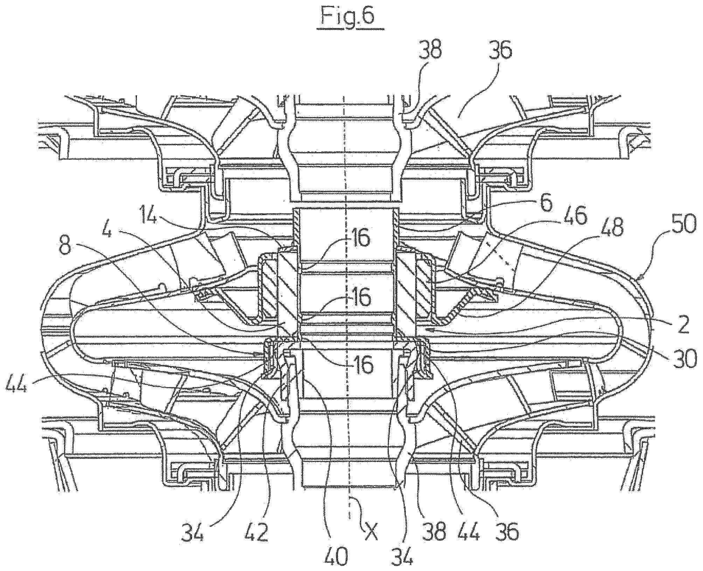

Die gezeigte Lagereinheit 2 dient zur Radiallagerung einer Welle eines Pumpenaggregates, insbesondere eines mehrstufigen Pumpenaggregates. Dabei kann eine solche Lagereinheit 2, wie später anhand von Fig. 6 beschrieben werden wird, in jeder Pumpenstufe vorgesehen werden. Die erfindungsgemäße Lagereinheit 2 wird auf die Welle aufgeschoben und auf dieser zentriert und zur Drehmomentübertragung formschlüssig fixiert. Die Lagereinheit 2 ist aus lediglich vier Bauteilen zusammengesetzt. Wesentliches Element ist eine Lagerhülse 4 aus einem Keramikmaterial, welche eine kreisringförmige Gestalt mit einer kreiszylindrischen Außenumfangsfläche aufweist, welche die Radiallagerfläche bildet. Die Lagerhülse 4 erstreckt sich wie die gesamte Lagereinheit 2 konzentrisch zur Längsachse X, welche der Drehachse der Welle des Pumpenaggregates entspricht. Die Lagerhülse 4 ist auf eine innere Hülse 6 aus Metall, insbesondere Edelstahl aufgesetzt. An ihrem ersten axialen Ende 7 ist die Hülse 6 mit einem Eingriffselement 8 verbunden, welches der Kupplung mit der Welle zur Drehmomentübertragung dient. Das Eingriffselement 8 weist eine eine erste Anlageschulter 9 bildende Axialfläche auf. Die Lagerhülse 4 ist zwischen der Axialfläche des Eingriffselements 8 und einer von dem ersten axialen Ende 7 beabstandete zweite Anlageschulter 10 in axialer Richtung am Außenumfang der Hülse 6 fixiert. Dabei ist zwischen der Anlageschulter 10 und dem Axialende 12 der Lagerhülse 4 eine ringförmige Feder 14 angeordnet.

Die Feder 14 ist als Tellerfeder ausgebildet. Sie weist einen z-förmigen Querschnitt auf, der radial sowohl außen als auch innen sich quer zur Längsachse erstreckende Schenkel aufweist, welche zwei entgegengesetzte axiale Anlagefläche 14a und 14b bilden, wobei die Anlagefläche 14a an den Außenumfang und die Anlagefläche 14b an den Innenumfang angrenzt. Im Querschnitt erstreckt sich zwischen den beiden Schenkeln ein gewinkelt verlaufender Abschnitt. Dieser bildet zwischen den beiden Anlageflächen ein bzgl. der Längsachse konisch verlaufendes Zwischenstück der Tellerfeder.

Die Feder 14 kommt mit ihrer innenumfänglichen Anlagefläche 14b an der Anlageschulter 10 und mit ihrer axial entgegengesetzten außenumfänglichen Anlagefläche 14a an dem Axialende 12 der Lagerhülse 4 zu liegen. Die Hülse 6 ist vorzugsweise als Drehteil ausgebildet und weist an ihrem Außenumfang eine gestufte kreiszylindrische Kontur auf. Durch die Stufung wird die ringförmige, dem ersten axialen Ende 7 zugewandte zweite Anlageschulter 10 geschaffen. Die Anlageschulter 10 ist somit eine radial nach außen auskragende Stufe am Außenumfang der Hülse 6. Zwischen der zweiten Anlageschulter 10 und dem ersten axialen Ende 7 bildet die Hülse 6 eine kreiszylindrische Anlagefläche, an welcher die Lagerhülse 4 mit ihrem Innenumfang anliegt.

Am Innenumfang der Hülse 6 sind drei radial nach innen auskragende Ringe 16 ausgeformt, deren ringförmiger Innendurchmesser konzentrisch zur Längsachse X und zur Außenumfangsfläche der Lagerhülse 4 ist. Dabei entspricht der Innendurchmesser der ringförmigen Vorsprünge bzw. Ringe dem Außendurchmesser einer aufzunehmenden Welle, sodass über die Ringe 16 die Hülse 6 und damit die gesamte Lagereinheit 2 an der Welle zentriert werden kann. Dadurch, dass die Hülse 6 nur mit den Ringen 16 am Außenumfang der Welle zur Anlage kommt, kann die Hülse 6 leichter auf die Welle aufgeschoben werden, da die Gefahr eines Verklemmens und die Reibung minimiert wird.

Das Eingriffselement 8 ist als Formteil aus Blech ausgebildet und weist eine im Wesentlichen topfförmige Gestalt mit einer Axialfläche bzw. einem Boden 18 auf, welcher der Hülse 6 zugewandt ist. Das Eingriffselement 8 ist mit dem Boden 18 an das erste Axialende 7 der Hülse 6 angesetzt. Der Boden 18 weist dazu eine kreisförmige zur Längsachse X konzentrische Öffnung 20 auf, welche einen Innendurchmesser hat, welcher dem Außendurchmesser der Hülse 6 an ihrem ersten Axialende 7 entspricht. So greift die Hülse 6 mit ihrem ersten Axialende 7 in die Öffnung 20 derart ein, dass ihr axiales Ende 7 bündig mit der Innenseite des Bodens 18 abschließt. Zwischen dem Innenumfang der Öffnung 20 und dem Außenumfang der Hülse 6 ist eine Schweißnaht 22 angebracht, welche die Hülse 6 und das Eingriffselement 8 fest miteinander verschweißt. Die Schweißnaht 22 besteht dabei aus vier einzelnen Abschnitten, wobei jeder Abschnitt umfänglich entlang der Außenfläche der Hülse 6 einen Bogen von etwa 40° beschreibt und jeweils zwei Abschnitte der Schweißnaht 22 bzgl. der Längsachse X der Hülse 6 einander diametral gegenüberliegend entlang des Außenumfangs der Hülse 6 angeordnet sind. Zwischen zwei benachbarten Abschnitten der Schweißnaht 22 befindet sich jeweils ein Bereich zwischen dem Innenumfang der Öffnung und dem Außenumfang der Hülse 6, in welchem keine Schweißnaht 22 angebracht ist. Das Eingriffselement 8 ist ebenfalls vorzugsweise aus rostfreiem Edelstahl ausgebildet.

Der Boden 18 kragt somit ausgehend von der Öffnung 20 radial über den Außenumfang der Hülse 6 nach außen aus und bildet so eine erste Anlageschulter 9, an welcher die Lagerhülse 4 mit ihrem zweiten Axialende 24 zur Anlage kommt. Dabei drückt die Feder 14 die Lagerhülse 4 gegen den Boden 18, sodass das Axialende 24 der Lagerhülse 4 in Anlage mit dem Boden 18 gehalten wird. Auf diese Weise wird die Lagerhülse 4 in axialer Richtung zwischen der zweiten Anlageschulter 10 und dem die erste Anlageschulter 9 bildenden Boden 18 des Eingriffselementes 8 fixiert. Die Anordnung der Feder 14 hat dabei den Vorteil, dass Längenänderungen aufgrund unterschiedlicher Wärmeausdehnungskoeffizienten des keramischen Materials der Lagerhülse 4 und des Metalls der Hülse 6 ausgeglichen werden können, sodass die Lagerhülse 4 frei von übermäßigen Druckbelastungen in axialer Richtung X gehalten wird.

Um eine drehfeste Verbindung zwischen dem Eingriffselement 8 und der Lagerhülse 4 herstellen zu können, weist die Lagerhülse 4 an zwei diametral entgegengesetzten Seiten an ihrem zweiten Axialende 24 zwei axial gerichtete Ausnehmungen 26 auf, welche Mitnehmer zur Drehmomentübertragung bilden. In die Ausnehmungen 26 greifen axial gerichtete Ausbuchtungen 28 am Boden 18 bzw. der ersten Anlageschulter 9 des Eingriffselementes 8 ein. Die Ausbuchtungen 28 können durch Umformung des Bodens 18 des Eingriffselementes 8 geformt werden. Die Ausbuchtungen 28 bilden somit Mitnahmeelemente, welche mit den Ausnehmungen 26 in der Lagerhülse 4 für eine drehfeste Verbindung zwischen der Lagerhülse 4 und dem Eingriffselement 8 sorgen.

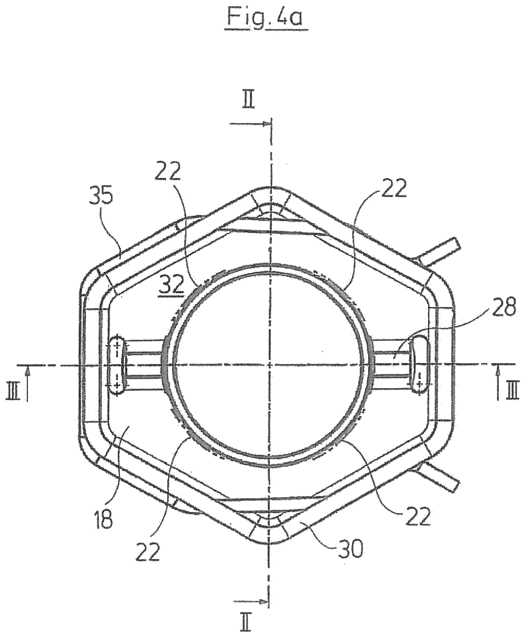

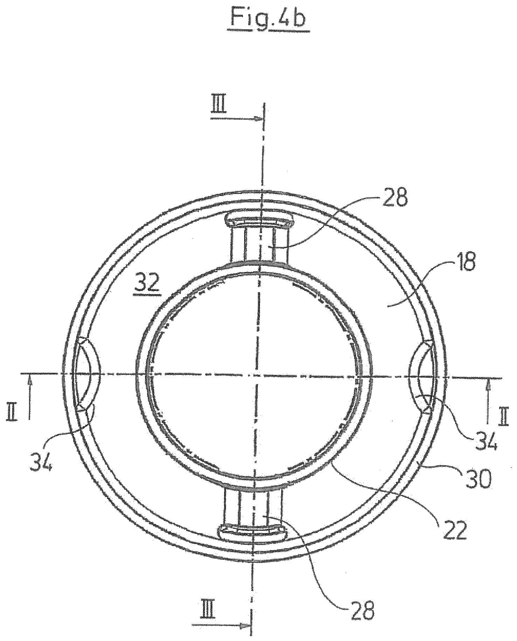

Das Eingriffselement 8 weist eine hier sechseckige Wandung 30 auf, welche sich ausgehend von dem Boden 18 in der der Hülse 6 abgewandten axialen Richtung X erstreckt (Fig 4a). Der Innenumfang der Wandung 30 ist somit nicht rotationssymmetrisch. Der Innendurchmesser der Wandung 30 ist größer als der der Hülse 6. Die Wandung 30 umschließt einen Aufnahmeraum 32, welcher zu seinem dem Boden 18 abgewandten Ende geöffnet ist. Der Aufnahmeraum 32 ist zur Aufnahme eines Eingriffsabschnittes eines Kupplungselementes 42 (siehe Fig.6), welches an der Welle fixiert wird, vorgesehen. Um eine Drehmomentübertragung von einem solchen Kupplungselement 42 auf das Eingriffselement 8 zu ermöglichen, weist die Wandung 30 in diesem Ausführungsbeispiel an zwei diametral entgegengesetzten Seiten parallel zueinander verlaufende Schlitze 33 auf, welche sich tangential zur Längsachse X erstrecken. In einer alternativen oder ergänzenden Ausführungsform kann die Wandung 30 anstatt der sechseckigen Form an den beiden diametral entgegengesetzten Seiten radial nach innen gerichtete Einbuchtungen 34 aufweisen (Fig. 4b). Die beiden Einbuchtungen 34 sind um 90° versetzt zu den Ausbuchtungen 28 in dem Eingriffselement 8 angeordnet. Das Eingriffselement 8 kann bei dieser Ausführungsform eine ringförmige Wandung 30 aufweisen. Durch die beiden Einbuchtungen 34 in der ringförmigen Wandung 30 ist der Innenumfang der Wandung 30 nicht rotationssymmetrisch gestaltet.

Ein Fixierungselement ist als Federbügel 35, beispielsweise aus Draht gefertigt, ausgebildet und ist elastisch verformbar. Die Schlitze 33 des Eingriffselements 8 (Fig. 4a) sind derart ausgestaltet, dass die Schlitze 33 den Federbügel 35 mit seinem Drahtdurchmesser aufnehmen können. Im montierten Zustand des Federbügels 35 an dem Eingriffselement 8 durchgreift der Federbügel 35 die beiden Schlitze 33, sodass der Federbügel 35 sich in den Schlitzen 33 sehnenförmig zu der ringförmigen Wandung 30 erstreckt. Weiterhin liegt der Federbügel 35 im montierten Zustand nahezu vollständig an der Außenseite der Wandung 30 des Eingriffselements 8 an. Ausnahmen bilden hierbei die beiden Endstücke des Federbügels 35. Diese sind radial nach außen gebogen, sodass während der Montage bzw. Demontage des Federbügels 35 an das Eingriffselement 8 ein einfaches Ergreifen des Federbügels 35 über dessen Endstücke ermöglicht wird. So wird der Federbügel 35 durch Einwirken auf die Endstücke des Federbügels 35 leicht elastisch aufgeweitet. Dies ermöglicht ein einfaches Anbringen bzw. Entfernen des Federbügels 35 an das Eingriffselement 8.

Die Ausführungsform des Eingriffselements 8 mit Schlitzen 33 und dem Federbügel 35 (Fig. 4a) ist bevorzugt bei Pumpenaggregaten mit nur einer Pumpenstufe als axiale Fixierung vorgesehen. Gerade bei einer geringen Anzahl an Pumpenstufen kann dieses Fixierungselement mittels einfacher Montage eine axiale Fixierung der Lagereinheit 2 an der Welle ermöglichen.

Anstatt den Aufnahmeraum 32 im Inneren der Wandung 30 im Querschnitt kreisförmig mit den Einbuchtungen 34 auszubilden, könnte die Wandung 30 auch andere zur Drehmomentübertragung geeignete Formen der Innenkontur der Wandung 30 und der Außenkontur der Überwurfmutter 42 aufweisen.

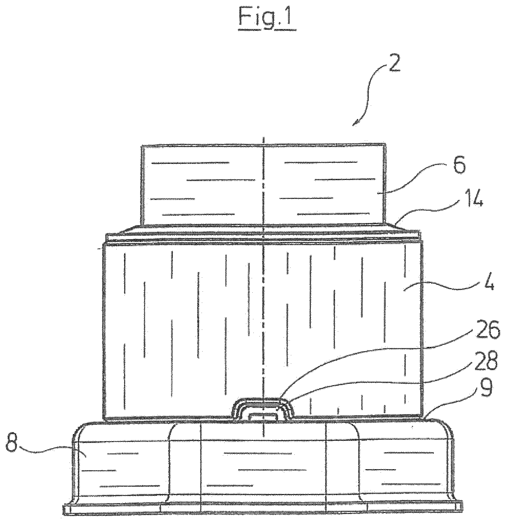

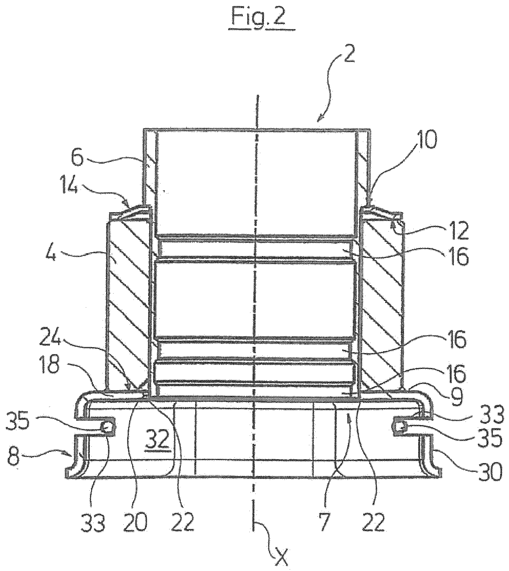

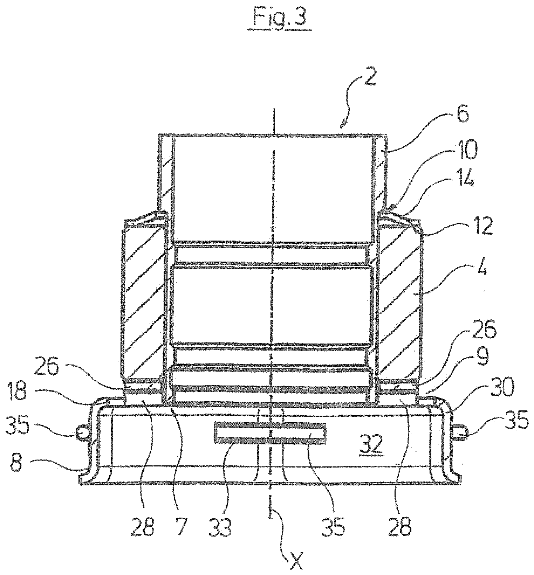

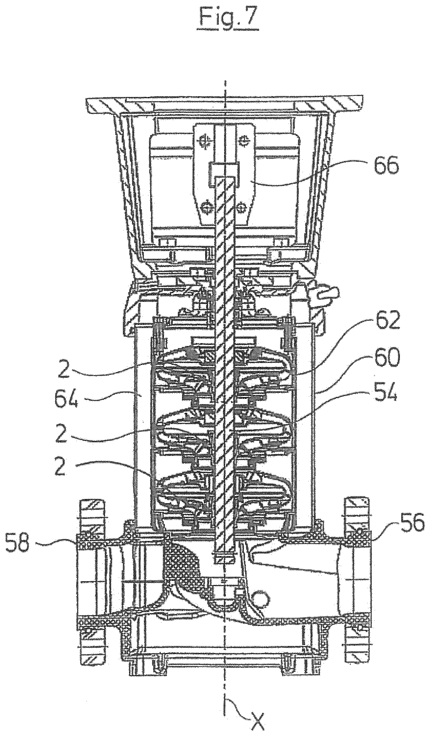

Die vorangehend anhand der Fig. 1 bis 4b beschriebene Lagereinheit 2 bildet so eine vorgefertigte Baueinheit. Zu deren Montage wird auf die Hülse 6 zunächst die Feder 14 und dann die Lagerhülse 4 aufgeschoben. Anschließend wird das Eingriffselement 8 auf die Hülse 6 aufgesetzt und die Schweißnaht 22 angebracht, sodass die Lagereinheit 2 fest und unlösbar montiert ist. Die so vormontierte Lagereinheit 2 wird dann in einem Pumpenaggregat, wie anhand von Fig. 6 und 7 erläutert, eingesetzt.

In Fig. 6 ist die Welle, welche sich entlang der Dreh- bzw. Längsachse X erstreckt, nicht gezeigt. Ein Laufrad 36 weist eine zentrale Nabe bzw. einen Laufradträger 38 auf, durch welchen sich die Welle entlang der Längsachse X erstreckt und mit welchem das Laufrad 36 drehfest an der Welle fixiert wird. Dazu greift in den Laufradträger 38 von einem Axialende her eine konische Klemmhülse 40 ein, welche an dem Laufradträger 38 durch eine Überwurfmutter 42 fixiert ist. Die Überwurfmutter 42 weist ein Innengewinde auf, welches mit einem Außengewinde am axialen Ende des Laufradträgers 38 in Eingriff tritt. Am Innenumfang ist der Laufradträger 38 ebenfalls konisch ausgebildet. Durch Aufschrauben der Überwurfmutter 42 wird die Klemmhülse 40 axial in das Innere des Laufradträgers 38 gedrückt. Durch die konischen Flächen wird dabei die Klemmhülse 40 auf den Außenumfang der Welle gepresst und so der Laufradträger 38 mit dem Laufrad 36 kraftschlüssig an der Welle fixiert.

Die Überwurfmutter 42 dient gleichzeitig als Kupplungselement zum Eingriff in den Aufnahmeraum 32 des Eingriffelementes 8 der Lagereinheit 2. Die Lagereinheit 2 ist ebenfalls auf die Welle aufgeschoben, sodass sich die Welle durch das Innere der Hülse 6 hindurch erstreckt und am Innenumfang der Ringe 16 zur Anlage kommt, wodurch die Lagereinheit 2 auf der Welle zentriert wird. Die Überwurfmutter 42 weist in diesem Ausführungsbeispiel an ihrem Außenumfang zwei radial nach außen gerichtete Ausnehmungen 44 auf, in welche die Einbuchtungen 34 am Innenumfang der Wandung 30 des Eingriffselementes 8 eingreifen. So wird eine formschlüssige drehfeste Kupplung zwischen der Überwurfmutter 42 und dem Eingriffselement 8 erreicht. Die Ausnehmungen 44 bilden dabei Eingriffsabschnitte, welche mit dem Eingriffselement 8 in formschlüssigen Eingriff treten. Auf diese Weise wird die Lagereinheit 2 drehfest mit der Welle gekoppelt.

Zur axialen Fixierung der Lagereinheit 2 an der Welle kann in einer alternativen oder ergänzenden Ausführungsform die Überwurfmutter 42 zwei zueinander parallele, zur Längsachse X senkrecht verlaufende Nuten aufweisen, welche im montierten Zustand des Eingriffselements 8 auf der Überwurfmutter 42 mit den Schlitzen 33 des Eingriffselements 8 fluchten. Das Eingriffselement 8 und die Überwurfmutter 42 weisen dabei eine sechseckige Wandung auf, wobei der Innenumfang der Wandung 30 des Eingriffselements 8 und der Außenumfang der Überwurfmutter 42 derart ausgestaltet sind, dass die Überwurfmutter 42 formschlüssig im montierten Zustand im Eingriffselement 8 sitzt. Über einen Federbügel 35, welcher sowohl in die Schlitze 33 des Eingriffselements 8 als auch in die Nuten der Überwurfmutter 42 eingreift, werden so das Eingriffselement 8 und die Überwurfmutter 42 in axialer Richtung formschlüssig miteinander verbunden.

Die Lagerhülse 4 gleitet mit ihrer Außenumfangsfläche, welche die Lagerfläche bildet, am Innenumfang eines feststehenden äußeren Lagerringes 46, welcher ebenfalls aus Keramik gefertigt ist und über einen Träger 48 an dem zwischen zwei Pumpenstufen angeordneten Leitapparat 50 fixiert ist. In dieser Weise können bei einem mehrstufigen Pumpenaggregat auch die weiteren Pumpenstufen ausgebildet sein, sodass in jeder Pumpenstufe die Welle über eine Lagereinheit 2 in radialer Richtung gelagert ist.

Das Kreiselpumpenaggregat 52 in Fig. 7 weist mehre Pumpenstufen mit Laufrädern 36 wie vorhergehend beschrieben auf, wobei die Pumpenstufen entlang einer gemeinsamen Welle 54 angeordnet sind. Dieses Ausführungsbeispiel zeigt drei Pumpenstufen. Es kann aber auch eine andere Anzahl an Pumpenstufen im Sinne der Erfindung in dem Pumpenaggregat 52 angeordnet sein. Die Welle 54 ist entlang der Längsachse X des Pumpenaggregats 52 ausgerichtet. Das Ausführungsbeispiel ist als eine Inlinepumpe ausgestaltet. So ist in einem ersten Gehäuseteil, welches axial am unteren Ende der des Pumpenaggregats 52 angeordnet ist, sowohl ein Sauganschluss 56 als auch ein Druckanschluss 58 angeordnet. Die Lagerung des Laufrades 36 einer einzelnen Pumpenstufe an der Welle 54 erfolgt dabei jeweils über eine Lagereinheit 2 und eine Überwurfmutter 42 wie vorhergehend anhand von Fig. 6 beschrieben. Außenumfänglich sind die mehreren Pumpenstufen von einer Außenwandung 60 und einer Innenwandung 62 umgeben. Zwischen Außenwandung 60 und Innenwandung 62 ist ein Kanal 64 ausgebildet. Der Kanal 64 führt dem Druckanschluss 58 das durch die Pumpenstufen geförderte Medium zu. In diesem Ausführungsbeispiel ist am axial oberen Ende des Pumpenaggregats 52 ein zweites Gehäuseteil angeordnet. An diesem zweiten Gehäuseteil ist eine Kupplung 66 zur Verbindung mit einem Motor angeordnet, welche das axial obere Ende der Welle 54 aufnimmt und die Welle in Rotation versetzt. Die Rotation wird über die Überwurfmuttern 42 (siehe Fig. 6) auf die Lagereinheiten 2 und somit auf die Laufräder 36 der Pumpenstufen übertragen.

### Bezugszeichenliste

- 2: - Lagereinheit
- 4: - Lagerhülse
- 6: - Hülse
- 7: - erstes Axialende
- 8: - Eingriffselement
- 9: - erste Anlageschulter
- 10: - zweite Anlageschulter
- 12: - Axialende
- 14: - Feder
- 14 a: - außenumfängliche Anlagefläche
- 14 b: - innenumfängliche Anlagefläche
- 16: - Ringe
- 18: - Boden
- 20: - Öffnung
- 22: - Schweißnaht
- 24: - zweites Axialende
- 26: - Ausnehmung
- 28: - Ausbuchtungen
- 30: - Wandung
- 32: - Aufnahmeraum
- 33: - Schlitze
- 34: - Einbuchtungen
- 35: - Federbügel
- 36: - Laufrad
- 38: - Laufradträger
- 40: - Klemmhülse
- 42: - Überwurfmutter
- 44: - Ausnehmungen
- 46: - Lagerring
- 48: - Träger
- 50: - Leitapparat
- 52: - Pumpenaggregat
- 54: - Welle
- 56: - Sauganschluss
- 58: - Pumpanschluss
- 60: - Außenwandung
- 62: - Innenwandung
- 64: - Kanal
- 66: - Kupplung

- X: - Längs- bzw. Drehachse

## Patentansprüche

1. Vormontierte Lagereinheit (2), welche ausgebildet ist zur Anbringung an einer Welle eines Pumpenaggregates, mit einer Hülse (6) zur Aufnahme der Welle und einer an der Hülse (6) außenumfänglich fixierten Lagerhülse (4), wobei die Hülse (6) an einem ersten axialen Ende (7) eine erste Anlageschulter (9) aufweist, wobei an einem zweiten entgegengesetzten axialen Ende die Hülse (6) eine zweite Anlageschulter (10) aufweist, welche die Lagerhülse (4) in einer Axialrichtung (X) fixiert, wobei die Lagerhülse (4) mit einem Axialende an der ersten Anlageschulter (9) anliegt und sich mit dem entgegengesetzten zweiten Axialende an der zweiten Anlageschulter (10) abstützt, sodass die Lagerhülse (4) in axialer Richtung zwischen den Anlageschultern (9, 10) fixiert ist,
**dadurch gekennzeichnet, dass**
die Hülse ein Eingriffselement (8), ausgebildet zum formschlüssigen, drehfesten Eingriff mit der Welle oder einem mit der Welle verbundenen Bauteil (42) aufweist, wobei das Eingriffselement (8) als Formteil aus Blech ausgebildet ist und eine im Wesentlichen topfförmige Gestalt mit einer Axialfläche bzw. einem Boden (18) aufweist, welcher der Hülse (6) zugewandt ist und die erste Anlageschulter (9) bildet.

2. Vormontierte Lagereinheit nach Anspruch 1, **dadurch gekennzeichnet, dass** die Lagereinheit (2), vorzugsweise an dem Eingriffselement (8), zumindest ein Fixierungselement aufweist, welches die Lagereinheit (2) an der Welle oder dem mit der Welle verbundenem Bauteil (42) axial fixiert.

3. Vormontierte Lagereinheit nach Anspruch 2, **dadurch gekennzeichnet, dass** das Eingriffselement (8) eine Umfangswandung (30) aufweist, welche zumindest einen Schlitz aufweist, wobei das Fixierungselement den Schlitz durchgreift.

4. Vormontierte Lagereinheit nach Anspruch 3, **dadurch gekennzeichnet, dass** das zumindest eine Fixierungselement als ein Federbügel ausgestaltet ist.

5. Vormontierte Lagereinheit nach einem der vorhergehenden Ansprüche, **dadurch gekennzeichnet, dass** das Eingriffselement (8) eine nicht rotationssymmetrische Umfangswandung (30) aufweist, welche vorzugsweise zumindest stellenweise eckig ausgestaltet sind.

6. Vormontierte Lagereinheit nach Anspruch 5, **dadurch gekennzeichnet, dass** die Umfangswandung (30) an ihrem Innenumfang im Querschnitt sechseckig ausgebildet sind.

7. Vormontierte Lagereinheit nach einem der vorhergehenden Ansprüche, **dadurch gekennzeichnet, dass** am Innenumfang der Hülse (6) zumindest ein Ring (16) ausgebildet ist, der radial inwärts gerichtet aus dem Innenumfang herausragt.

8. Vormontierte Lagereinheit nach einem der vorhergehenden Ansprüche, **dadurch gekennzeichnet, dass** die Lagerhülse (4) an einem ersten Axialende, das der ersten Anlageschulter (9) und dem Eingriffselement (8) zugewandt ist, zumindest einen Mitnehmer (26) aufweist, der mit zumindest einem an dem Eingriffselement (8), der ersten Anlageschulter (9) oder der Hülse ausgebildetem korrespondierendem Mitnahmeelement (28) drehfest in Eingriff ist.

9. Vormontierte Lagereinheit nach Anspruch 8, **dadurch gekennzeichnet, dass** der zumindest eine Mitnehmer (26) als Ausnehmung (26) oder Vorsprung ausgebildet ist.

10. Vormontierte Lagereinheit nach einem der vorhergehenden Ansprüche, **dadurch gekennzeichnet, dass** eine Feder (14) zwischen der Lagerhülse (4) und der zweiten Anlageschulter (10) der Hülse (6) angeordnet ist.

11. Vormontierte Lagereinheit nach Anspruch 10, **dadurch gekennzeichnet, dass** die Feder als Tellerfeder (14) ausgebildet ist, welche vorzugsweise einen s-förmigen Querschnitt aufweist.

12. Vormontierte Lagereinheit nach einem der Ansprüche 10 oder 11, **dadurch gekennzeichnet, dass** zumindest Teile der Hülse (6), der Feder (14), das Eingriffselement (8), die erste Anlageschulter (9) und/oder das Fixierungselement aus Edelstahl gefertigt sind.

13. Vormontierte Lagereinheit nach einem der vorhergehenden Ansprüche, **dadurch gekennzeichnet, dass** die Lagerhülse (4) aus Keramik, vorzugsweise aus Siliziumkarbid, gefertigt ist.

14. Vormontierte Lagereinheit nach einem der vorhergehenden Ansprüche, **dadurch gekennzeichnet, dass** die Hülse (6) mit dem Eingriffselement (8) und/oder der ersten Anlageschulter (9) verschweißt, vorzugsweise lasergeschweißt, ist.

15. Vormontierte Lagereinheit nach Anspruch 14, **dadurch gekennzeichnet, dass** die Hülse (6) mit dem Eingriffselement (8) an mindestens zwei Abschnitten verschweißt ist und dass ein Bereich zwischen den zwei verschweißten Abschnitten keine Verschweißung aufweist.

16. Verfahren zur Herstellung einer vormontierten Lagereinheit (2) nach einem der Ansprüche 1 - 15, **dadurch gekennzeichnet, dass** ein federndes Element (14) auf einer Hülse (6) gegen eine zweite Anlageschulter (10) angebracht wird, eine Lagerhülse (4) auf die Hülse (6) gegen das federnde Element (14) ruhend angebracht wird und ein Eingriffselement (8) von einem ersten Axialende der Hülse (6) aus in axialer Richtung gegen die Lagerhülse (4) und die zweite Anlageschulter (10) gespannt wird, wobei während des Spannens die Hülse (6) und das Eingriffselement (8) miteinander verschweißt werden.

17. Pumpenaggregat, insbesondere mit einer mehrstufigen Kreiselpumpe, **gekennzeichnet durch** eine vormontierte Lagereinheit (2) nach einem der vorhergehenden Ansprüche 1 bis 15.

## Claims

1. A preassembled bearing unit (2) which is designed for attachment on a shaft of a pump assembly, with a sleeve (6) for receiving the shaft and with a bearing sleeve (6) which is fixed on the sleeve (4) at the outer periphery, wherein the sleeve (6) at a first axial end (7) comprises a first contact shoulder (9), wherein the sleeve (6) comprises a second contact shoulder (10) at a second opposite axial end, said second contact shoulder fixing the bearing sleeve (4) in an axial direction (X), wherein the bearing sleeve (4) bears with an axial end on the first contact shoulder (9) and with the opposite second axial end supports itself on the second contact shoulder (10), so that the bearing sleeve (4) is fixed in the axial direction between the contact shoulders (9, 10),
**characterised in that**
the sleeve forms an engagement element (8), designed for the positive, rotationally fixed engagement with the shaft or with a component (42) which is connected to the shaft, wherein the engagement element (8) is designed as a formed part of sheet metal and has an essentially pot-like shape with an axial surface or a base (18) which faces the sleeve (6) and forms the first contact shoulder (9).

2. A preassembled bearing unit according to claim 1, **characterised in that** the bearing unit (2), preferably on the engagement element (8), comprises at least one fixation element which axially fixes the bearing unit (2) on the shaft or on the component (42) which is connected to the shaft.

3. A preassembled bearing unit according to claim 2, **characterised in that** the engagement element (8) comprises a peripheral wall (30) which comprises at least one slot, wherein the fixation element engages through the slot.

4. A preassembled bearing unit according to claim 3, **characterised in that** the at least one fixation element is designed as a spring clip.

5. A preassembled bearing unit according to one of the preceding claims, **characterised in that** the engagement element (8) comprises a non-rotationally symmetrical peripheral wall (30) which preferably at least in locations is designed in a cornered manner.

6. A preassembled bearing unit according to claim 5, **characterised in that** the peripheral wall (30) at its inner periphery is designed hexagonally in cross section.

7. A preassembled bearing unit according to one of the preceding claims, **characterised in that** at least one ring (16) is formed on the inner periphery of the sleeve (6) and projects in a radially inwardly directed manner out of the inner periphery.

8. A preassembled bearing unit according to one of the preceding claims, **characterised in that** the bearing sleeve (4) at a first axial end which is towards the first contact shoulder (9) and the engagement element (8) comprises at least one catch (26) which is engaged in a rotationally fixed manner with at least one corresponding driver element (28) which is formed on the engagement element (8), the first contact shoulder (9) or the sleeve.

9. A preassembled bearing unit according to claim 8, **characterised in that** the at least one catch (26) is designed as a recess (26) or projection.

10. A preassembled bearing unit according to one of the preceding claims, **characterised in that** a spring (14) is arranged between the bearing sleeve (4) and the second contact shoulder (10) of the sleeve (6).

11. A preassembled bearing unit according to claim 10, **characterised in that** the spring is designed as a disc spring (14) which preferably has an s-shaped cross section.

12. A preassembled bearing unit according to one of the claims 10 or 11, **characterised in that** at least parts of the sleeve (6), of the spring (14), the engagement element (8), the first contact shoulder (9) and/or the fixation element are manufactured of stainless steel.

13. A preassembled bearing unit according to one of the preceding claims, **characterised in that** the bearing sleeve (4) is manufactured of ceramic, preferably of silicon carbide.

14. A preassembled bearing unit according to one of the preceding claims, **characterised in that** the sleeve (6) is welded, preferably laser welded, to the engagement element (8) and/or to the first contact shoulder (9).

15. A preassembled bearing unit according to claim 14, **characterised in that** the sleeve (6) is welded to the engagement element (8) on at least two sections and that a region between the two welded sections has no welding.

16. A method for manufacturing a preassembled bearing unit (2) according to one of the claims 1 - 15, **characterised in that** a resilient element (14) is attached on a sleeve (6) against a second contact shoulder (10), a bearing sleeve (4) is attached in a resting manner onto the sleeve (6) against the resilient element (14), and an engagement element (8) from a first axial end of the sleeve (6) is tightened in the axial direction against the bearing sleeve (4) and the second contact shoulder (10), wherein the sleeve (6) and the engagement element (8) are welded to one another during the tightening.

17. A pump assembly, in particular with a multistage centrifugal pump, **characterised by** a preassembled bearing unit (2) according to one of the preceding claims 1 to 15.

## Revendications

1. Unité de palier préassemblée (2) qui est configurée pour un montage sur un arbre d'un groupe motopompe, comprenant un manchon (6) pour recevoir l'arbre et un manchon de palier (4) fixé sur le pourtour du manchon (6),
le manchon (6) comportant à une première extrémité axiale (7) un premier épaulement d'appui (9),
le manchon (6) comportant à une seconde extrémité axiale opposée un deuxième épaulement d'appui (10) qui fixe le manchon de palier (4) dans une direction axiale (X), le manchon de palier (4) prenant appui par une extrémité axiale sur le premier épaulement d'appui (9) et par la seconde extrémité axiale, l'extrémité opposée, sur le deuxième épaulement d'appui (10), si bien que le manchon de palier (4) soit fixé en direction axiale entre les épaulements d'appui (9, 10),
**caractérisée en ce que**
le manchon comprend un élément d'engagement (8) configuré pour un engagement solidaire en rotation, par complémentarité de formes, avec l'arbre ou avec un composant (42) relié à l'arbre, l'élément d'engagement (8) étant formé sous la forme d'une pièce de forme en tôle et présentant une forme sensiblement d'un pot avec une surface axiale ou bien un fond (18) qui est orienté vers le manchon (6) et constitue le premier épaulement d'appui (9).

2. Unité de palier préassemblée selon la revendication 1, **caractérisée en ce que** l'unité de palier (2) comprend au moins un élément de fixation, de préférence sur l'élément d'engagement (8), qui fixe l'unité de palier (2) axialement sur l'arbre ou sur le composant (42) relié à l'arbre.

3. Unité de palier préassemblée selon la revendication 2, **caractérisée en ce que** l'élément d'engagement (8) comprend une paroi périphérique (30) qui comporte au moins une fente, l'élément de fixation traversant la fente.

4. Unité de palier préassemblée selon la revendication 3, **caractérisée en ce que** ledit au moins un élément de fixation est configuré comme un étrier de ressort.

5. Unité de palier préassemblée selon l'une des revendications précédentes, **caractérisée en ce que** l'élément d'engagement (8) comprend une paroi périphérique (30) non symétrique de rotation qui comprend de préférence au moins par endroits des coins.

6. Unité de palier préassemblée selon la revendication 5, **caractérisée en ce que** la paroi périphérique (30) présente sur son pourtour intérieur, vue en coupe transversale, une forme hexagonale.

7. Unité de palier préassemblée selon l'une des revendications précédentes, **caractérisée en ce qu'**il est formé sur le pourtour intérieur du manchon (6), au moins un anneau (16) qui est en saillie, radialement vers l'intérieur, sur le pourtour intérieur.

8. Unité de palier préassemblée selon l'une des revendications précédentes, **caractérisée en ce que** le manchon de palier (4) comprend à une première extrémité axiale orientée vers le premier épaulement d'appui (9) et l'élément d'engagement (8), au moins un entraîneur (26) qui est engagé, solidaire en rotation, avec au moins un organe d'entraînement (28) correspondant formé sur l'élément d'engagement (8), sur le premier épaulement d'appui (9) ou sur le manchon.

9. Unité de palier préassemblée selon la revendication 8, **caractérisée en ce que** ledit au moins un entraîneur (26) est configuré comme un évidement (26) ou comme une avancée.

10. Unité de palier préassemblée selon l'une des revendications précédentes, **caractérisée en ce qu'**un ressort (14) est disposé entre le manchon de palier (4) et le deuxième épaulement d'appui (10) du manchon (6).

11. Unité de palier préassemblée selon la revendication 10, **caractérisée en ce que** le ressort est configuré comme une rondelle Bel-leville (14) qui présente de préférence une section transversale en S.

12. Unité de palier préassemblée selon l'une des revendications 10 ou 11, **caractérisée en ce qu'**au moins des parties du manchon (6), du ressort (14), l'élément d'engagement (8), le premier épaulement d'appui (9) et/ou l'élément de fixation sont réalisés en acier inoxydable.

13. Unité de palier préassemblée selon l'une des revendications précédentes, **caractérisée en ce que** le manchon de palier (4) est réalisé en céramique, de préférence en carbure de silicium.

14. Unité de palier préassemblée selon l'une des revendications précédentes, **caractérisée en ce que** le manchon (6) est soudé, de préférence soudé au laser, sur l'élément d'engagement (8) et/ou le premier épaulement d'appui (9).

15. Unité de palier préassemblée selon la revendication 14, **caractérisée en ce que** le manchon (6) est soudé sur l'élément d'engagement (8) dans au moins deux zones et qu'une zone entre les deux zones soudées est exempte de soudure.

16. Procédé pour fabriquer une unité de palier préassemblée (2) selon l'une des revendications 1 à 15, **caractérisé en ce qu'**un élément résilient (14) est monté sur un manchon (6) contre un deuxième épaulement d'appui (10), qu'un manchon de palier (4) est monté sur le manchon (6) en appui contre l'élément résilient (14) et qu'un élément d'engagement (8) est contraint, à partir d'une première extrémité axiale du manchon (6) en direction axiale, contre le manchon de palier (4) et le deuxième épaulement d'appui (10), le manchon (6) et l'élément d'engagement (8) étant soudés l'un sur l'autre pendant la phase de contrainte.

17. Groupe motopompe, notamment avec une pompe centrifuge à plusieurs étages, **caractérisé par** une unité de palier préassemblée (2) selon l'une des revendications précédentes 1 à 15.
